# EUROPEAN PATENT SPECIFICATION

(11) **EP 0 762 773 B1**
(45) Date of publication and mention of the grant of the patent: **16.10.2002**
(21) Application number: 96306321.9
(22) Date of filing: 30.08.1996
(51) Int. Cl.: H04N 7/26

(54) **Hierarchial video encoder and decoder**
Hierarchischer Videokodierer und -dekodierer
Codeur et décodeur vidéo hiérarchiques

(30) Priority: 31.08.1995 JP 22337495
(43) Date of publication of application: 12.03.1997
(73) Proprietor: SHARP KABUSHIKI KAISHA, Osaka-shi, Osaka-fu 545-0013 (JP)
(72) Inventor: Sato, Seiji, Toride-shi, Ibaragi (JP); Ema, Nobuyuki, Nagareyama-shi, Chiba (JP); Hibi, Keiichi, Matsudo-shi, Chiba (JP)
(74) Representative: Brown, Kenneth Richard

(56) References cited:
- WO-A-96/02895
- US-A- 5 122 873
- US-A- 5 253 058
- WESTERINK P H ET AL: "PROGRESSIVE TRANSMISSION OF IMAGES USING SUBBAND CODING" MULTIDIMENSIONAL SIGNAL PROCESSING, AUDIO AND ELECTROACOUSTICS, GLASGOW, MAY 23 - 26, 1989, vol. 3, no. CONF. 14, 23 May 1989, pages 1811-1814, XP000089227 INSTITUTE OF ELECTRICAL AND ELECTRONICS ENGINEERS
- DARRAGH J C ET AL: "FIXED DISTORTION SUBBAND CODING OF IMAGES FOR PACKET-SWITCHED NETWORKS" IEEE JOURNAL ON SELECTED AREAS IN COMMUNICATIONS, vol. 7, no. 5, June 1989, page 789/800 XP000036740
- WOODS J W ET AL: "MOTION COMPENSATED MULTIRESOLUTION TRANSMISSION OF HDTV" COUNTDOWN TO THE NEW MILENNIUM, PHOENIX, DEC. 2 - 5, 1991, vol. 1, 2 December 1991, pages 77-79, XP000325951 INSTITUTE OF ELECTRICAL AND ELECTRONICS ENGINEERS
- STILLER C ET AL: "LAPLACIAN PYRAMID CODING OF PREDICTION ERROR IMAGES" VISUAL COMMUNICATION AND IMAGE PROCESSING '91: VISUAL COMMUNICATION, BOSTON, NOV. 11 - 13, 1991, vol. PART 1, no. VOL. 1605, 11 November 1991, pages 47-57, XP000479217 KOU-HU TZOU;TOSHIO KOGA
- HAMID GHARAVI: "SUBBAND CODING ALGORITHMS FOR VIDEO APPLICATIONS: VIDEOPHONE TO HDTV-CONFERENCING" IEEE TRANSACTIONS ON CIRCUITS AND SYSTEMS FOR VIDEO TECHNOLOGY, vol. 1, no. 2, 1 June 1991, pages 174-183, XP000214520
- KOSSENTINI F ET AL: "Subband image coding using entropy-constrained residual vector quantization" INFORMATION PROCESSING & MANAGEMENT, 1994, UK, vol. 30, no. 6, pages 887-896, XP002082577 ISSN 0306-4573

## Description

### BACKGROUND OF THE INVENTION

The present invention relates to video-coding device for compressive encoding of video-signals by reducing redundancy contained therein so that the coded video-signal may be transmitted over communication channels and relates to a video-decoding device for decoding the video-signals coded by the video-coding device.

Recently, with the spread of digital transmission networks, the progress of video-data processing techniques and the advance of image compressing techniques, there has been an increasing need for realization of video communication services over communication networks.

Video communication services, which are represented by, e.g., television videophone services and video conferencing services, are now in the way of realization by means of high-performance communication networks such as ISDN (Integrated Service Digital Network) and B-ISDN (Broad Integrated Service Digital Network). Today, the above-mentioned video-communication services are also desired to be available over low-speed transmission networks such as analog telecommunication networks and mobile-communication networks. Many studies have been carried out for realizing these projects.

It is impractical to transmit video-signals as they are over any communication line because video-signals contains a large amount of data and requires a wideband transmission capacity for transmission. However, each video-signal also includes redundancy and may be reduced by saving its redundancy. A compressive coding technique (hereinafter referred simply to as coding) is widely used to effectively handle and transmit video-signals.

As for a conventional video-coding device using an interframe-prediction with orthogonal transform coding method, an input video-signal is encoded frame by frame by a motion-compensated interframe-predicting portion. Namely, the motion-compensated interframe-predicting portion reads, from a frame memory, a just-before encoded and stored therein video-frame as a predictive value, determines a difference of the input video-frame from the predictive value by using a differential computing portion and then encodes the obtained differential value by intraframe coding method.

The predicted error signal outputted from the differential computing portion is transferred to a discrete cosine-transformation portion (hereinafter referred to as DCT portion) wherein the signal is converted to a DCT coefficient by the method of DCT being a variety of orthogonal transformation.

The DCT coefficient value outputted from the DCT portion is transferred to a quantizing portion whereby it is quantized to a suitable level according to the quantizing step size specified by a coding control portion, thereby the information amount is compressed.

The quantized output from the quantizing portion is outputted as a coding result and is also transferred to an inverse quantizing portion.

The inverse quantizing portion obtains a DCT coefficient by performing the operations reverse to those made by the quantizing portion. The inverse DCT portion performs operations for inverse DCT on the obtained DCT coefficient.

The output signal of the inverse DCT portion is transferred to an adder portion whereby it is added to the predicted value read from the frame memory. The sum value is stored in the frame memory portion and will be used for interframe prediction for a proceeding input video-frame.

The input video-signal is thus encoded using a loop-like (coding loop) circuit.

The operation of the conventional hierarchical video-coding device is as follows:

The hierarchy organizing portion hierarchically classifies components of an input video-signal. The coding portions encode corresponding hierarchically classified components of the input video-signal by referring preceding coded and decoded components stored in the frame memory portions and output the coding results of the hierarchical components to an external device. On the other hand, the coding results from the coding portions are also transferred to the decoding portions whereby they are decoded and then transferred to the frame memory portions. The coding results stored in the frame memory portions will be used for coding a proceeding input video-signal.

As described above, the conventional video-coding device can considerably reduce the information amount of an input video-signal since it quantizes the video-signal after removing its temporal-redundancy by motion-compensated prediction and spatial redundancy by DCT. The coded video-signal with thus reduced information amount, however, is still inadaptable to be transmitted over a communication line featured by a low-transmission rate. Consequently, a sequence of frames to be transmitted is usually thinned by dropping all frames other than selected. This enables increasing the number of bits to be allocated to one frame, thereby improving quality of the coded video-signal.

The above-mentioned conventional video-coding device and video-decoding device, however, can not start decoding a video-frame until coded information of one frame is completely received. Therefore, a considerable delay of transmission may arise with dropping many frames when the devices work on a communication line having a low-transmission rate. The thinned sequence of frames may also decrease temporal-resolution of coded and decoded video-signals.

Woods J W *et al*: 'Motion Compensated Multiresolution Transmission of HDTV' Countdown to the New Millennium, Phoenix, Dec 2-5, 1991, vol. 1, 2 December 1991, pages 77-79, XP000325951 Institute of Electrical and Electronics Engineers, relates to a video coding device which uses subband decomposition in hierarchical estimation of motion in a video signal. The image signal for a frame is used to generate a multiresolution pyramid. Woods J W et al: 'Motion Compensated Multiresolution Transmission of HDTV' Countdown to the New Millennium, Phoenix, Dec 2-5, 1991, vol. 1, 2 December 1991, pages 77-79, XP000325951 Institute of Electrical and Electronics Engineers, also discloses deriving multiresolution motion estimates.

### SUMMARY OF THE INVENTION

In view of the above-mentioned problems, it is desirable to provide a video-coding device and a video-decoding device, which are capable of coding and decoding video-signals to be transmitted, with a minimized transmission delay and a minimized decrease of temporal-resolution, over communication lines having a low-transmission-rate.

It is also desirable to provide a video coding device which comprises subband decomposition means for decomposing a video-frame into subbands and hierarchical information-transmitting means for separately encoding video-information of each subband received from the subband decomposition means and successively transmitting the coded video-signal of at every resolution in each frame.

It is also desirable to provide a video decoding device for decoding and displaying receiving coded video-signal of subbands for respective resolution ranges, which has hierarchical video-decoding means that decodes coded video-signal of subbands for every resolution in the order from low to high resolution and displays the decoded video-signal, then adds a sequence of transmitted images of high-resolution components to the corresponding images of low-resolution and displays complete video-frames.

It is also desirable to provide a video-coding device which divides an input video-signal into subband components (frequency classes) by the subband-decomposition means, encodes subband-components respectively by the hierarchical coding means and successively transmits coded information of each resolution band in each frame by the hierarchical information-transmitting means.

It is also desirable to provide a video-decoding device in which the hierarchical video-decoding means decode subband-components successively transmitted by the hierarchical information-transmitting means (of the video-coding device), starting from the lowest frequency (resolution) subband-components, namely, the video-decoding device can start decoding video-information at the time of receiving a low-frequency component signal for one frame without waiting for all hierarchical information of one frame (i.e., considerably reducing the transmission delay that the prior art device encountered).

It is also desirable to provide a video-decoding device which displays first a low-frequency component video-frame and then a video-frame composed of the low-frequency component and higher resolution components, namely, the dropped frames are reproduced with interpolation by successively adding higher components to the preceding frame at the video-decoding side.

The invention provides a video coding device as set out in claim 1.

The invention also provides a video decoding device as set out in claim 3.

The invention also provides a communication system as set out in claim 5.

### BRIEF DESCRIPTION OF THE DRAWINGS

Fig. 1 shows the structure of a conventional video-coding device.

Fig. 2 shows the structure of a conventional hierarchical video-coding device.

Fig. 3 is a view showing an embodiment of a video-coding device according to the present invention.

Fig. 4 is a view how to subdivide a band by a subband-decomposition portion of a video-coding device according to an embodiment of the present invention.

Fig. 5 is a flow chart for explaining the operation of a video-coding device according to an embodiment of the present invention.

Fig. 6 is a view showing how to transmit coded information according an embodiment of the present invention.

Fig. 7 is a view showing an embodiment of a video-decoding device according to the present invention.

Fig. 8 is a flow chart for explaining the operation of a video-decoding device according to an embodiment of the present invention.

Fig. 9 is a view for explaining a method for scaling a motion vector.

Fig. 10 illustrates video-images decoded by a conventional video-decoding device and by a video-decoding device according to an embodiment of the present invention.

### PREFERRED EMBODIMENT OF THE INVENTION

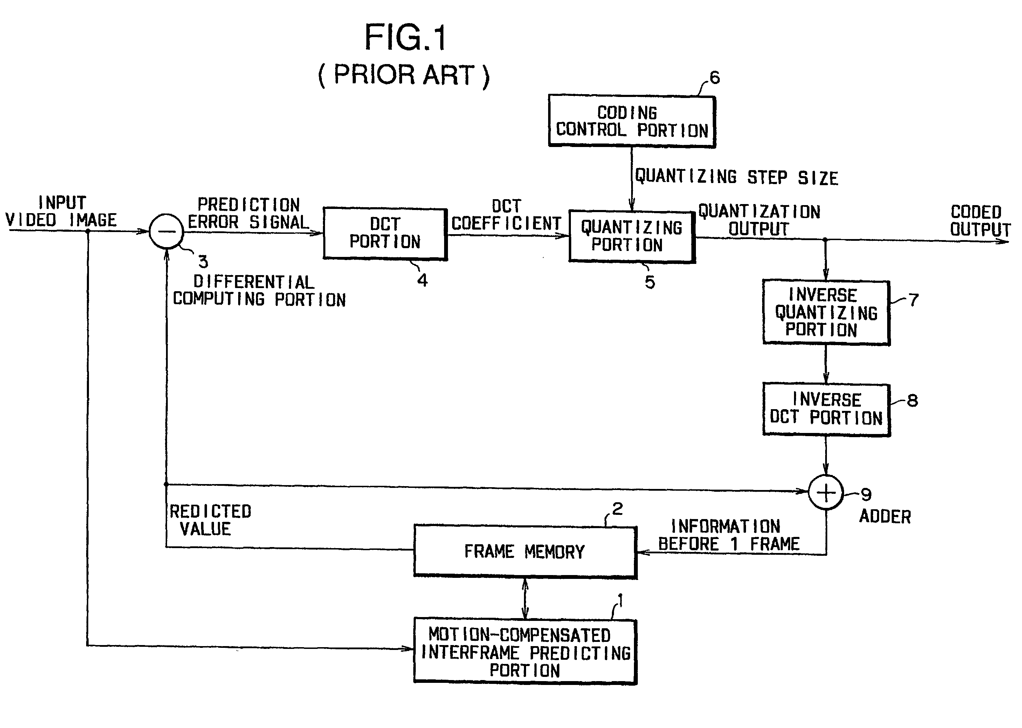

Fig. 1 shows a conventional video-coding device using an interframe-prediction with orthogonal transform coding method. As shown in Fig. 1, an input video-signal is encoded frame by frame by a motion-compensated interframe-predicting portion 1. Namely, the motion- compensated interframe-predicting portion 1 reads, from a frame memory 2, a just-before encoded and stored therein video-frame as a predictive value, determines a difference of the input video-frame from the predictive value by using a differential computing portion 3 and then encodes the obtained differential value by intraframe coding method.

The predicted error signal outputted from the differential computing portion 3 is transferred to a discrete cosine-transformation (DCT) portion 4 wherein the signal is converted to a DCT coefficient by the method of DCT being a variety of orthogonal transformation.

The DCT coefficient value outputted from the DCT portion 4 is transferred to a quantizing portion 5 whereby it is quantized to a suitable level according to the quantizing step size specified by a coding control portion 6, thereby the information amount is compressed.

The quantized output from the quantizing portion 5 is outputted as a coding result and is also transferred to an inverse quantizing portion 7.

The inverse quantizing portion 7 obtains a DCT coefficient by performing the operations reverse to those made by the quantizing portion 5. The inverse DCT portion 8 performs operations for inverse DCT on the obtained DCT coefficient.

The output signal of the inverse DCT portion 8 is transferred to an adder portion 9 whereby it is added to the predicted value read from the frame memory 2. The sum value is stored in the frame memory portion 2 and will be used for interframe prediction for a proceeding input video-frame. The input video-signal is thus encoded using a loop-like (coding loop) circuit.

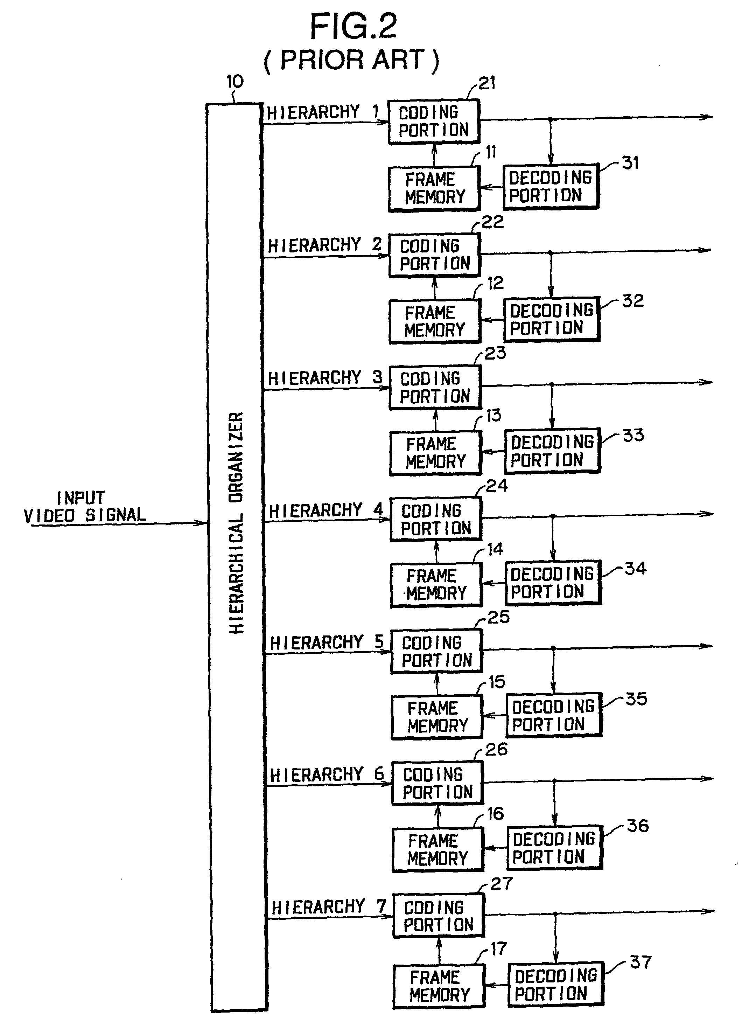

Fig. 2 shows a structure of the conventional hierarchical video-coding device which comprises a hierarchy organizing portion 10 for organizing the hierarchy of video-signals, frame memory portions 11 to 17 for storing preceding encoded and decoded video-signals, coding portions 21 to 27 for encoding an input video-signal by referring a preceding coded signal stored in the frame memory portions 11 to 17 and decoding portions 31 to 37 for decoding the coded results outputted from the coding portions 21 to 27.

The operation of the conventional hierarchical video-coding device shown in Fig. 2 is as follows:

The hierarchy organizing portion 10 hierarchically classifies components of an input video-signal. The coding portions 21 to 27 encode corresponding hierarchically classified components of the input video-signal by referring preceding coded and decoded components stored in the frame memory portions 11 to 17 and output the coding results of the hierarchical components to an external device. On the other hand, the coding results from the coding portions 21 to 27 are also transferred to the decoding portions 31 to 37 whereby they are decoded and then transferred to the frame memory portions 11 to 17. The coding results stored in the frame memory portions 11 to 17 will be used for coding a proceeding input video-signal.

As described above, the conventional video-coding device can considerably reduce the information amount of an input video-signal since it quantizes the video-signal after removing its temporal-redundancy by motion-compensated prediction and spatial redundancy by DCT. The coded video-signal with thus reduced information amount, however, is still inadaptable to be transmitted over a communication line featured by a low-transmission rate. Consequently, a sequence of frames to be transmitted is usually thinned by dropping all frames other than selected. This enables increasing the number of bits to be allocated to one frame, thereby improving quality of the coded video-signal.

The above-mentioned conventional video-coding device and video-decoding device, however, can not start decoding a video-frame until coded information of one frame is completely received. Therefore, a considerable delay of transmission may arise with omitting many frames when the devices work on a communication line having a low-transmission rate. The thinned sequence of frames may also decrease temporal-resolution of coded and decoded video-signals.

Referring to accompanying drawings, a video-coding device and a video-decoding device, which are preferred embodiments of the present invention, will be described as follows:

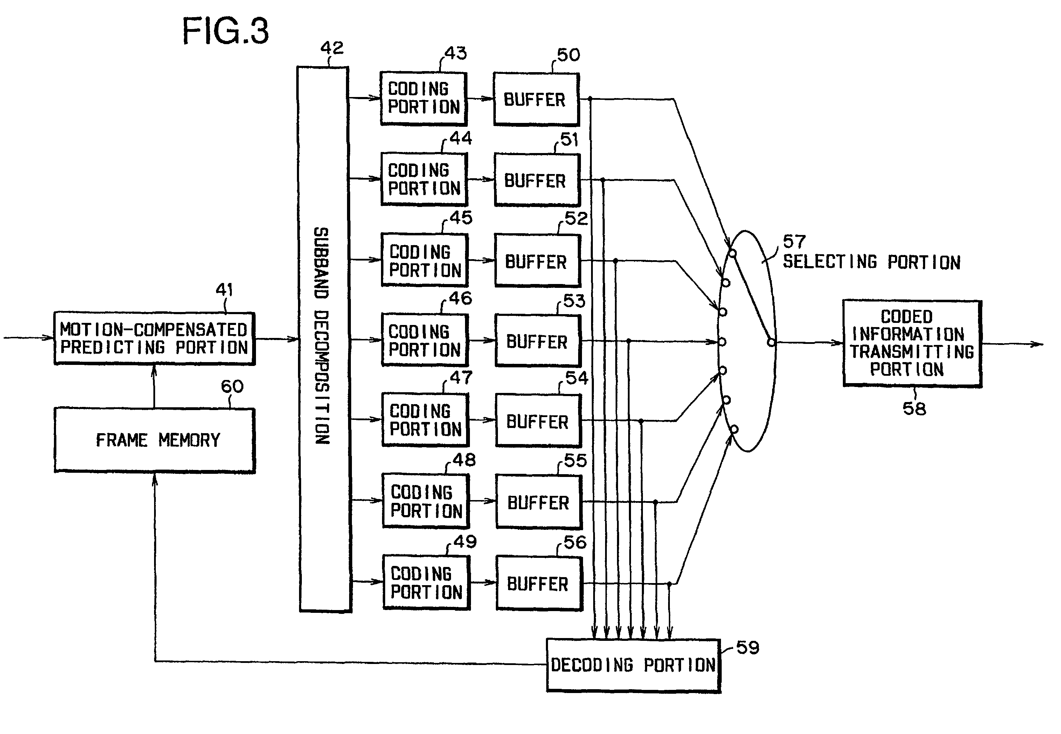

Fig. 3 shows an exemplified structure of a hierarchical coded-information transmitting system used in a video-coding device according to an embodiment of the present invention.

In Fig. 3, the system includes a motion-compensative predicting portion 41 for executing motion-compensated prediction, a subband-decomposition portion 42 for dividing a predicted-error signal into subbands (frequency resolution), coding portions 43 to 49 for encoding predicted error signal of each subband buffer portions 50 to 56, a selecting portion 57, a coded-information transmitting portion 58, a decoding portion 59 and a frame memory portion 60.

The details of the system are as follows:

The motion-compensated predicting portion 41 conducts the motion-compensated prediction of an input video-signal with reference to preceding video-signals just-before encoded, decoded, then stored in the frame memory portion 60. (These reference video-signals will be described later in detail.) The prediction portion 41 outputs an obtained predicted-error signal and motion vectors.

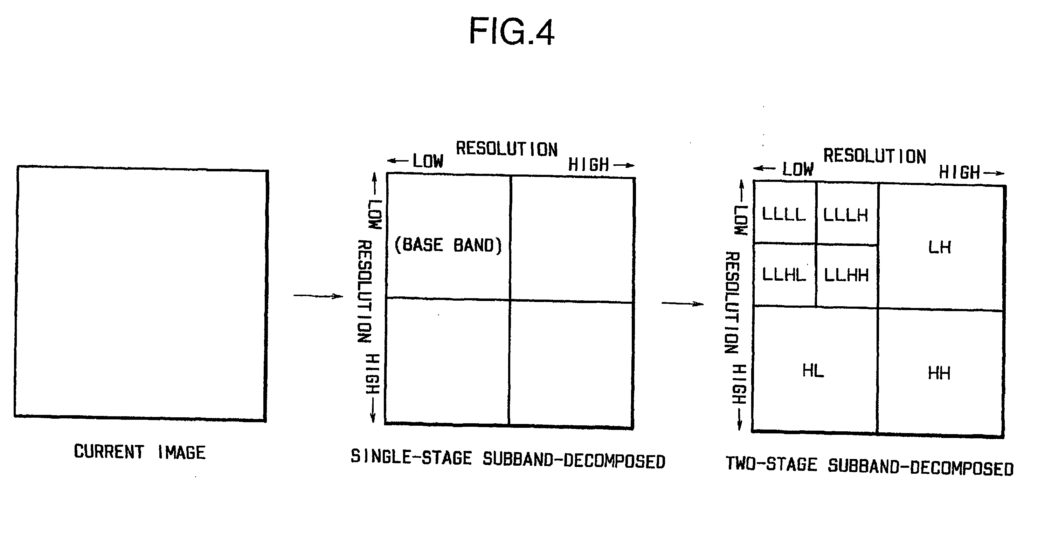

The subband-decomposition portion 42 divides the predicted -error signal received from the motion-compensated predicting portion 41 into subbands as shown in Fig. 4. In Fig. 4, an original image is processed horizontally and vertically through a one-dimensional frequency band decomposition filter to be divided into 4 subband-division images. Among 4 division images, 1 division image of the lowest frequency components (i.e., a base-band image) is further divided in the same way into 4 subdivision images. All 7 different subband-images are finally prepared.

The coding portions 43 to 49 perform encoding with quantization of respective predicted-error signals received from the subband-decomposition portion 42 to compress the information amount, then output the respective coding results.

The buffer portions 50 to 56 store the coding results received from the coding portions 43 to 49.

The selecting portion 57 determines a hierarchy of transmittable coded information. The transmitting order of the coded images of the subband components is the resolution ascending order, starting the lowest resolution band image (i.e., in the order of images LLLL, LLLH, LLHL, LLHH, LH, HL and HH in Fig. 4). At this time, the coding results corresponding to the subband components are read from the buffers 50 to 56 and outputted to the coded information transmitting portion 58.

The coded information transmitting portion 58 transmits the coded information received from the selecting portion 57 in every hierarchy per frame. At the same time, it transmits motion vectors, a frame start signal, a frame end signal and subband identifiers.

The decoding portion 59 decodes coding results received from the buffers 50 to 56 and outputs the decoding results to the frame memory portion 60.

The frame memory portion 60 stores therein the coded and decoded images (frames) which will be used for interframe prediction coding of a proceeding frame.

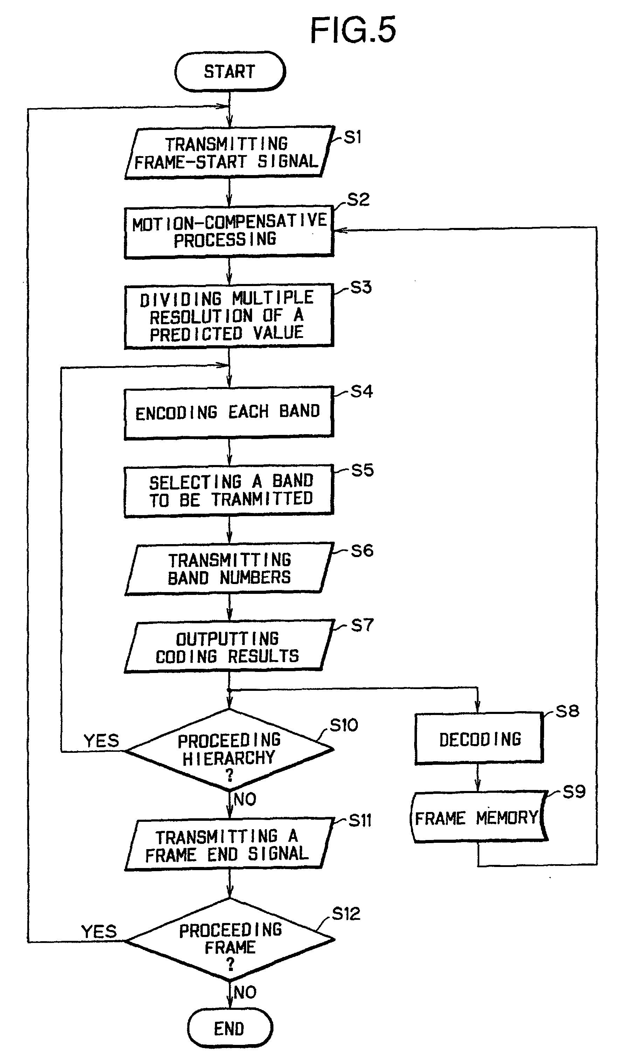

The operation of the hierarchical coded-information transmitting means shown in Fig. 3 will be described according to a flow chart of Fig. 5.

The coded-information transmitting portion 58 transmits a frame start signal (Step S1). The motion-compensated predicting portion 41 conducts motion-compensated prediction on an input video-signal and outputs a predicted-error signal and motion vectors (Step S2). The predicted-error signal outputted at Step S2 is divided into subbands by the subband-decomposition portion 42 (Step S3). The coding portions 43 to 49 encode the. respective subband-images of the predicted-error signal from Step S3 and stores coding results in the buffer portions 50 to 56 (Step S4). The selecting portion 57 selects the coding result of an image LLLL, reads the coding result from the buffer portion 50 and sends the coding result to the coded-information transmitting portion 58 (Step S5). The coded-information transmitting portion 58 transmits the band identifier of LLLL selected at Step S3 (Step S6) and the coded information obtained at Step S5 (Step S7). On the other hand, the coded information outputted at Step S5 is also transferred to the decoding portion 59 whereby it is decoded (Step S8) and then stored in the frame memory portion 60 (Step S9) for use for motion-compensated predicting of a proceeding frame. The above-mentioned sequential operations from Steps S4 to S9 are repeated for every hierarchy (subbands) in the fore-described (resolution ascending) order (Step 10). After processing all hierarchical subband-components, the coded-information transmitting portion 59 transmits a frame end signal (Step S11) and finishes encoding of one frame. The processing ends when all frames were encoded (Step S12).

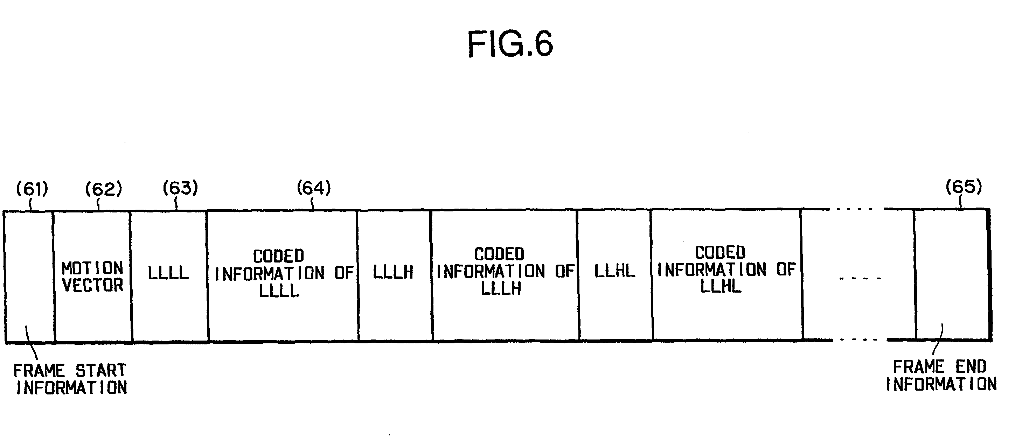

Fig. 6 shows an output of a coded-information transmitting portion 58. A frame start signal is first transmitted (61). All motion vectors for one frame are transmitted (62). A subband number identifying a subband whereto a coded information belongs is transmitted (63) and then the coded information of said subband is transmitted (64). The operations 62 and 64 are repeated successively for all subbands ranging from the lowest resolution to the highest resolution. After all were done, a frame end signal is transmitted (65).

Referring to accompanying drawings, a video-decoding device embodying the present invention will be described below:

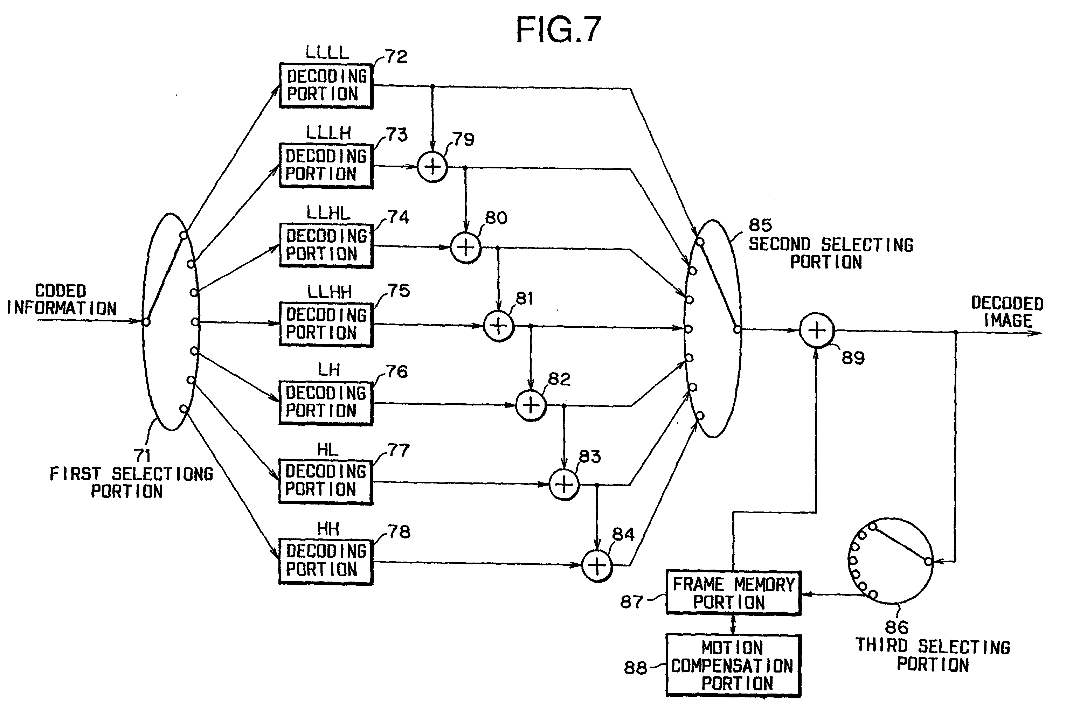

Fig. 7 shows an exemplified structure of a video-decoding device according to the present invention, which comprises the first selecting portion 71 for determining a decodable hierarchy, decoding portions 72 to 78 for decoding respective hierarchical images, adder portions 79 to 84, the second selecting portion 85 for selecting a decoded image to be displayed, the third selecting portion 86 for controlling images to be stored in a frame memory portion 87, the frame memory portion 87, a motion compensating portion 88 and an adding portion 89.

The details of the components of the video-decoding device are as follows:

The first selecting portion 71 reads a subband number contained in a coded information and transmits coded information to corresponding decoding portion (one of decoding portions 72 to 78 to be described later). The decoding portions 72 to 78 decode the coded information received from the first selecting portion 71 and output a predicted-error signal.

Each of the adder portions 79 to 84 adds a subband predicted error signal to corresponding preceding subband predicted error signal.

The second selecting portion 85 selects one of decoded images outputted from the adder portions 79 to 84, which is to be displayed. This portion works in synchronism with the first selecting portion 71.

The third selecting portion 86 works in synchronism with the first selecting portion 71. When all subbands have been decoded, the third selecting portion 86 stores decoded images into the frame memory portion 87.

The frame memory portion 87 stores a preceding decoded image. The motion-compensating portion 88 performs motion-compensative prediction operations by using motion vectors and the preceding decoded image stored in the frame memory portion 87. At the same time, it conducts scaling of motion vectors in proportion to time of a subband-image to be decoded.

The adder portion 89 synthesizes a decoded image by adding a predicted-error signal to a predicted-value received from the frame memory portion 87.

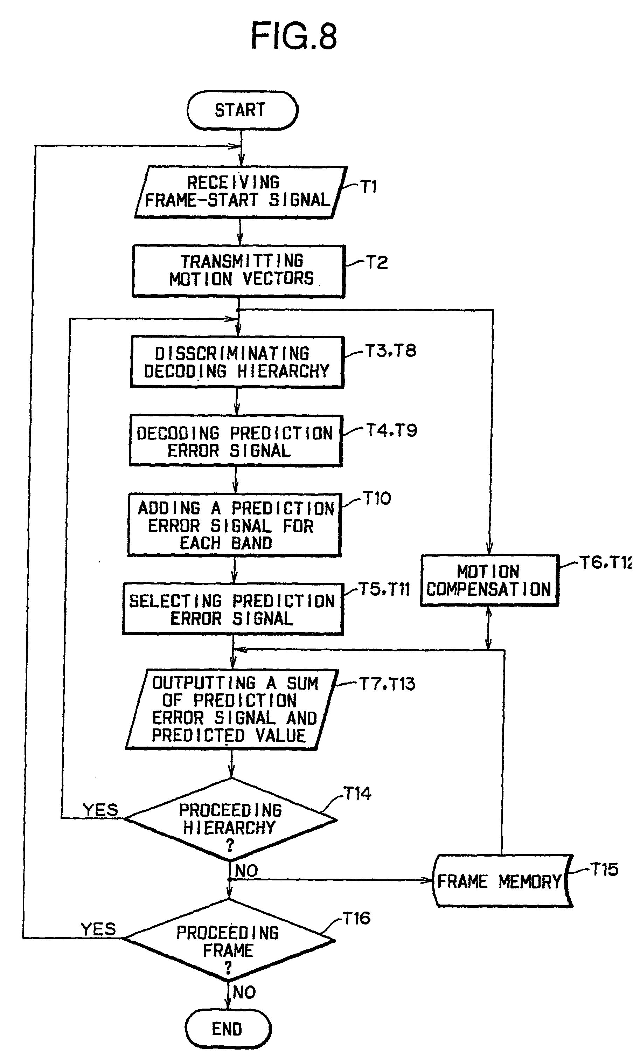

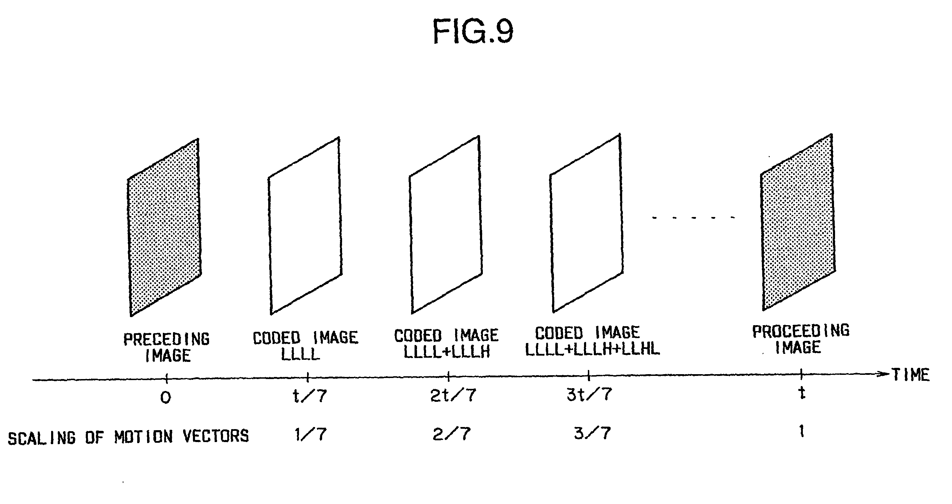

The operation of the video-decoding device shown in Fig. 7 will be described according to a flow chart of Fig. 8 and scaling of motion vector shown in Fig. 9. It is assumed that an input coded video-information is formatted as shown in Fig. 6. A frame start signal is first detected (Step T1), then succeeding information "motion vector" (62) is transferred to the motion compensating portion 88 (Step T2). The first selecting portion 71 judges that a succeeding information "band number" (63) indicates the lowest band LLLL and transfers a succeeding information "coded information" (64) to the decoding portion 72 for decoding the coded information of the LLLL-band (Step T3). The decoding portion 72 decodes the coded information (64) received at Step T3 and outputs a predicted-error signal of the LLLL-band component to the second selecting portion 85 and the adder portion 89 (Step T4). On the other hand, the second 85 works in synchronism with the first selecting portion 71 and outputs the decoded predicted-error signal of the received LLLL-band of the coded information to the adder portion 89 (Step T5). On the other hands, the motion compensating portion 88 conducts motion compensating prediction by scaling the motion vectors received at Step T2 and reads a predicted value from the frame memory portion 87 (Step T6). The predicted-error signal outputted at Step T5 and the predicted value outputted at Step T6 are added to each other by the adder portion 89, then a decoded image is outputted (Step T7). Decoding the lowest band image LLLL is now finished. Next, the first selecting portion (63) judges that a succeeding information "band number" 73 indicates a band LLLH to be decoded and transfers a succeeding information "coded information" (64) to the decoding portion (63) for decoding the coded information of the LLLH-band (Step T8). The decoding portion 73 decodes the coded information (64) received at Step T8 and outputs a predicted-error signal of LLLH-band to the adder portion 79 (Step T9). The adder portion 79 adds the LLLL-band predicted-error signal obtained at Step T5 to the LLLH-band predicted-error signal obtained at Step T9 and sends the calculation result to the second selecting portion 85 and the adder potion 80 (Step T10). The second selecting portion 85, which works in synchronism with the first selecting portion 71, outputs the predicted-error signal obtained by adding the LLLL-band value to the LLLH-band value at Step T10 to the adder portion 89 (Step T11). On the other hands, the motion compensating portion 88 conducts motion compensating prediction by scaling the motion vectors received at Step T2 and reads a predicted value from the frame memory portion 87 (Step T12). The predicted-error signal outputted at Step T11 and the predicted value outputted at Step T12 are added to each other by the adder portion 89, then a decoded image is outputted (Step T13). Decoding the band images LLLL and LLLH is now finished. The same operations as Steps T8 to T13 are repeated for each of subband images LLHL, LLHH, LH, HL and HH in the shown order (Step 14). On the completion of decoding all subbands, the third selecting portion 86, which works in synchronism with the first selecting portion 71, outputs and stores the decoded image (video-frame) into the frame memory portion 87 (Step T15). The processing ends after completing the decoding of all frames (Step T16).

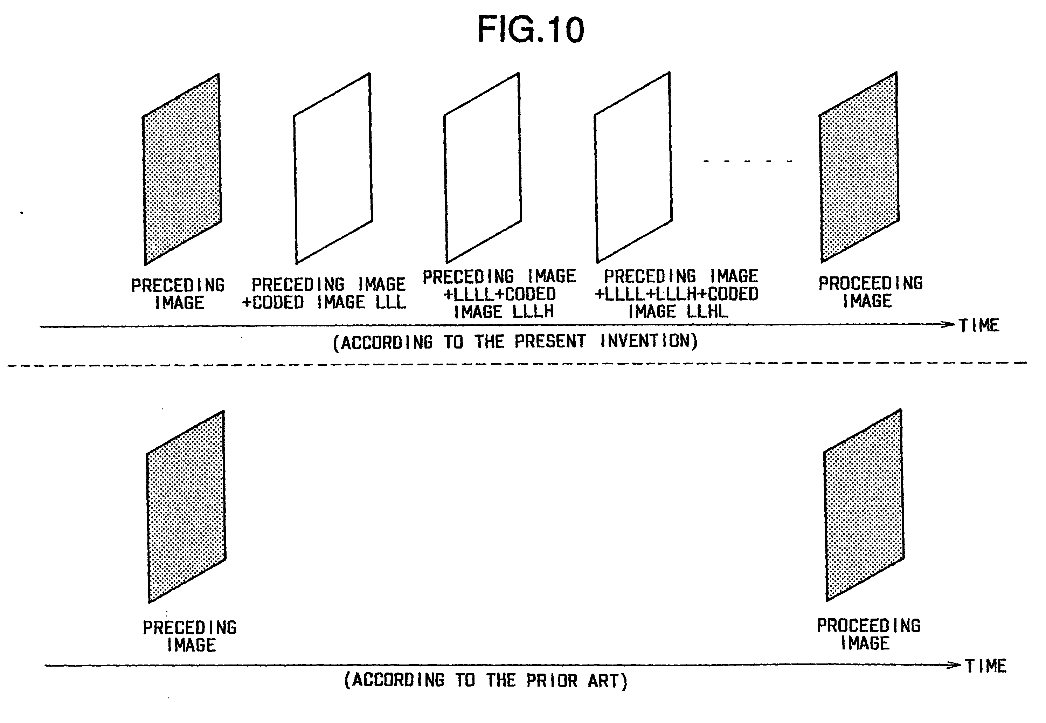

Fig. 10 shows the state of decoded images (video-frames) when decoding received coded information formatted as shown in Fig. 6 by the video-decoding device according to an embodiment of the present invention as compared with the state of decoded images when decoding the same coded information by the prior art decoding device. As shown in Fig. 10, the video-decoding device according to the embodiment of the present invention can decode an image of a lowest resolution band LLLL at the beginning stage of receiving a video-signal and, then, sequentially synthesize images for every hierarchical layer on completion of receiving and decoding each layer image. Owing to this advantageous feature, the transmission delay may be limited to a time necessary for receiving coded information of a lowest resolution band LLLL, assuring a considerable reduction of the transmission delay time. An output image of each stage is obtained by stepwise increasing a predicted value by each of subband components (from low frequency to high frequency) of predicted-error signal and, therefore, can be used as frames for interpolating dropped frames. The first received motion vector can be scaled to adapt to respective timing of receiving and decoding coded information of subsequently receivable subbands. This enables forming interpolating frames representing smooth motion, assuring considerable improvement of temporal resolution and quality of output images. This can be achieved without any special interpolating processing. By this reason, the video-decoding device can be made more compact as compared with the conventional device.

As is apparent from the foregoing description, the present invention offers the following advantageous effects:

As coded information of every subband for one video-frame is successively transmitted in an ascending order of resolution from a low frequency and decoded by the video-decoding device according to the present invention, the need for waiting for arriving entire information of coded object image is eliminated even in video-transmission over a low bit-rate communication line. This realizes a considerable reduction of a transmission delay.

An output image of each stage is obtained by stepwise increasing a predicted value by each of band components (from low frequency to high frequency) of predicted-error signal and, therefore, can be used as frames for interpolating dropped frames.

The first received motion vector can be scaled to adapt to respective timing of receiving and decoding coded information of subsequently receivable subbands, enabling forming interpolating frames representing smooth motion, assuring considerable improvement of temporal resolution and quality of output images. No special interpolating processing is required and, therefore, the decoding device can be made more compact as compared with the conventional device.

## Claims

1. A video coding device comprising:
motion-compensated prediction means (41) for converting an input video signal into a prediction error signal and a motion vector;
band dividing means (42) for converting the prediction error signal of a video frame from the motion-compensated prediction means (41) into band components of different resolutions; and
coding means (43-49) for separately encoding each of the prediction error signal band components from the band-dividing means (42);
transmission means (58) for transmitting a motion vector for a frame followed by coded prediction error signal band components, encoded by the coding means (43-49), for a frame in order from the lowest resolution component to the highest resolution component.

2. A video coding device according to claim 1 further comprising decoding means (59) for receiving and decoding each the separately encoded prediction error signal band components; and a memory (60) for storing information output from the decoding means for use in motion-compensated prediction of a subsequent frame.

3. A video decoding device for decoding a received video signal composed of a motion vector and coded prediction error signal band components of different resolutions for a frame, the device comprising:
motion compensating means (87, 88) for performing motion compensation using the motion vector;
decoding means (72-78) for decoding each of the band components of said coded prediction error signal;
first adding means (79-84) for synthesizing band components by adding each decoded band component of the prediction error signal for one frame to all lower band components already decoded; and
second adding means (89) for outputting a decoded image corresponding to the prediction error signal containing components up to a certain resolution level by adding the prediction error signal obtained by the first adding means to a predicted value output from the motion compensating means (87, 88).

4. A video decoding device as claimed in claim 3 further comprising motion compensating means (87, 88) wherein a motion vector is scaled in accordance with the output from the first adding means (79-84) and used to output a predicted value.

5. A video communication system comprising a video coding device as claimed in claim 1 or claim 2 at the transmitter and a video decoding device as claimed in claim 3 or claim 4 at the receiver.

## Patentansprüche

1. Videocodiervorrichtung mit:
- einer Einrichtung (41) für bewegungskompensierte Vorhersage zum Umsetzen eines Eingangsvideosignals in ein Vorhersagefehlersignal und einen Bewegungsvektor;
- einer Bandunterteilungseinrichtung (42) zum Umsetzen des Vorhersagefehlersignals eines Videorahmens von der Einrichtung (41) für bewegungskompensierte Vorhersage in Bandkomponenten verschiedener Auflösungen; und
- einer Codiereinrichtung (43 - 49) zum getrennten Codieren jeder der Bandkomponenten des Vorhersagefehlersignals von der Bandunterteilungseinrichtung (42);
- einer Übertragungseinrichtung (58) zum Übertragen eines Bewegungsvektors pro Rahmen gefolgt von codierten Vorhersagefehlersignal-Bandkomponenten, wie durch die Codiereinrichtung (43 - 49) codiert, für einen Rahmen in der Reihenfolge der Komponente geringster Auflösung bis zur Komponente höchster Auflösung.

2. Videocodiervorrichtung nach Anspruch 1, ferner mit einer Decodiereinrichtung (59) zum Empfangen und Decodieren jeder der getrennt codierten Vorhersagefehlersignal-Bandkomponenten sowie einem Speicher (60) zum Speichern der von der Decodiereinrichtung ausgegebenen Information zur Verwendung bei der bewegungskompensierten Vorhersage eines folgenden Rahmens.

3. Videodecodiervorrichtung zum Decodieren eines empfangenen Videosignals aus einem Bewegungsvektor und codierten Vorhersagefehlersignal-Bandkomponenten verschiedener Auflösungen für einen Rahmen, mit:
- einer Einrichtung (87, 88) zur Bewegungskompensation zum Ausführen einer Bewegungskompensation unter Verwendung des Bewegungsvektors;
- einer Decodiereinrichtung (72 - 78) zum Decodieren jeder der Bandkomponenten des codierten Vorhersagefehlersignals;
- einer ersten Addiereinrichtung (79 - 84) zum Zusammensetzen von Bandkomponenten durch Hinzufügen jeder decodierten Bandkomponente des Vorhersagefehlersignals für einen Rahmen zu allen bereits decodierten niedrigeren Bandkomponenten; und
- einer zweiten Addiereinrichtung (89) zum Ausgeben eines decodierten Bilds entsprechend dem Vorhersagefehlersignal, das Komponenten bis zu einem bestimmten Auflösungsgrad enthält, durch Addieren des durch die erste Addiereinrichtung erhaltenen Vorhersagefehlersignals zu einem von der Einrichtung (87, 88) für Bewegungskompensation ausgegebenen Vorhersagewerts.

4. Videodecodiervorrichtung nach Anspruch 3, ferner mit einer Einrichtung (87, 88) für Bewegungskompensation, bei der ein Bewegungsvektor entsprechend dem Ausgangssignal der ersten Addiereinrichtung (79 - 84) skaliert wird und zum Ausgeben eines Vorhersagewerts verwendet wird.

5. Videokommunikationssystem mit einer Videocodiervorrichtung nach Anspruch 1 oder 2 im Sender und einer Videodecodiervorrichtung nach Anspruch 3 oder 4 im Empfänger.

## Revendications

1. Dispositif de codage vidéo, comprenant :
un moyen de prédiction à compensation de mouvement (41), servant à convertir un signal vidéo d'entrée en un signal d'erreur de prédiction et en un vecteur de mouvement ;
un moyen de division de bande (42) prévu pour convertir le signal d'erreur de prédiction d'une image vidéo complète, provenant du moyen de prédiction à compensation de mouvement (41), en des composantes de bande ayant des définitions différentes ; et
des moyens de codage (43 à 49) afin de coder séparément chacune des composantes de la bande du signal d'erreur de prédiction, provenant du moyen de division de bande (42) ;
un moyen de transmission (58) destiné à transmettre un vecteur de mouvement pour une image complète, suivi par des composantes codées de la bande du signal d'erreur de prédiction, telles que codées par les moyens de codage (43 à 49), pour une image complète et dans l'ordre, à partir de la composante ayant la définition la plus faible jusqu'à la composante ayant la définition la plus élevée.

2. Dispositif de codage vidéo selon la revendication 1, comprenant en outre un moyen de décodage (59), afin de recevoir et de décoder chacune des composantes de la bande du signal d'erreur de prédiction, qui ont été codées séparément ; et une mémoire (60) prévue pour conserver les informations fournies par le moyen de décodage, pour une utilisation lors de la prédiction à compensation de mouvement d'une image complète suivante.

3. Dispositif de décodage vidéo destiné à décoder un signal vidéo reçu, se composant d'un vecteur de mouvement et de composantes codées de la bande du signal d'erreur de prédiction, ayant des définitions différentes pour une image complète, le dispositif comprenant :
des moyens de compensation de mouvement (87, 88) prévus pour exécuter une compensation de mouvement en utilisant le vecteur de mouvement ;
des moyens de décodage (72 à 78) afin de décoder chacune des composantes de la bande dudit signal codé d'erreur de prédiction ;
des premiers moyens additionneurs (79 à 84) destinés à synthétiser les composantes de bande, en ajoutant chaque composante décodée de la bande du signal d'erreur de prédiction, pour une image complète, à toutes les composantes inférieures de la bande déjà décodées ; et
un deuxième moyen additionneur (89) servant à fournir une image décodée, correspondant au signal d'erreur de prédiction contenant des composantes allant jusqu'à un certain niveau de définition, en ajoutant le signal d'erreur de prédiction, obtenu à partir des premiers moyens additionneurs, à une valeur prédite, provenant des moyens de compensation de mouvement (87, 88).

4. Dispositif de décodage vidéo selon la revendication 3, comprenant en outre des moyens de compensation de mouvement (87, 88) dans lesquels un vecteur de mouvement est mis à l'échelle en fonction de la sortie provenant des premiers moyens additionneurs (79 à 84) et est utilisé pour fournir une valeur prédite.

5. Système de transmission vidéo comprenant, au niveau de l'émetteur, un dispositif de codage vidéo selon la revendication 1 ou la revendication 2 et, au niveau du récepteur, un dispositif de décodage vidéo selon la revendication 3 ou la revendication 4.
